# EUROPÄISCHE PATENTSCHRIFT

(11) **EP 0 744 421 B1**
(45) Veröffentlichungstag und Bekanntmachung des Hinweises auf die Patenterteilung: **17.04.2002**
(21) Anmeldenummer: 96107621.3
(22) Anmeldetag: 13.05.1996
(51) Int. Cl.: C08G 18/66, C08G 18/79, C09D 175/06

(54) **Pulverlack für matte Beschichtungen**
Powder coating for eggshell coatings
Laque pulvérulente pour des revêtements mats

(30) Priorität: 24.05.1995 DE 19519006
(43) Veröffentlichungstag der Anmeldung: 27.11.1996
(73) Patentinhaber: BAYER AG, 51368 Leverkusen (DE)
(72) Erfinder: Meier-Westhues, Hans-Ulrich, Dr., 51379 Leverkusen (DE); Schultz, Wolfgang, 47829 Krefeld (DE); Laas, Hans Josef, Dr, 50733 Köln (DE); Schäfer, Walter, Dr., 42799 Leichlingen (DE); Klee, Hans-Peter, 51399 Burscheid (DE)

(56) Entgegenhaltungen:
- EP-A- 0 639 598
- US-A- 4 413 079
- US-A- 4 788 255

## Beschreibung

Die Erfindung betrifft einen Pulverlack zur Herstellung matter Beschichtungen.

Die Entwicklung von Pulverlacken neben high-solids-Lacken und wäßrigen Beschichtungssystemen gewinnt zunehmend an Bedeutung. Pulverlacke setzen bei der Applikation keine Lösemittel frei und lassen sich mit sehr hohem Materialausnutzungsgrad verarbeiten.

Qualitativ besonders hochwertige, licht- und wetterbeständige Beschichtungen lassen sich mit hitzehärtbaren Pulverlacken auf Polyurethanbasis herstellen. Die Mehrzahl der bekannten Polyurethan-(PUR)-Pulverlacke bestehen aus festen Polyesterpolyolen, die mit festen aliphatischen oder cycloaliphatischen blockierten Polyisocyanaten ausgehärtet werden.

Für verschiedene Anwendungen, beispielsweise zur Beschichtung von Büromöbeln, Elektro- und Elektronikgeräten oder für rein dekorative Beschichtungen, besteht ein großes Interesse an Pulverlacken, die bei der Aushärtung matte Oberflächen ergeben. Auch für die Beschichtung von Fassadenteilen sind glänzende, stark reflektierende Lacksysteme häufig unerwünscht. Es hat daher nicht an Versuchen gefehlt, Pulvermattlacke auf PUR-Basis zu entwickeln.

Die Mitverwendung von feinteiligen mineralischen oder polymeren Mattierungsmitteln, eine bei Naßlacken gebräuchliche Methode zur Einstellung niedriger Glanzgrade, führt in Pulverlacksystemen im allgemeinen nicht zum gewünschten Erfolg; die Beschichtungen verlieren mit steigendem Gehalt an Mattierungsmittel zunehmend an mechanischen Eigenschaften. Auch das in den DE-A 2 147 653 und 2 247 779 beschriebene "trockene" Mischen zweier getrennt hergestellter, farbtonmäßig gleich formulierter Lackpulver unterschiedlicher Bindemittelbasis ergibt nur wenig befriedigende Ergebnisse. Insbesondere dann, wenn anfallender Lack-overspray recyclisiert werden soll, sind die auf diese Weise erzielbaren Matteffekte nur schlecht reproduzierbar.

Polyurethan-Pulverlacke aus Polyesterpolyolen in Kombination mit Pyromellithsäuredianhydrid und ε-Caprolactam-blockierten Polyisocyanaten auf Basis von Isophorondiisocyanat (IPDI) als Vernetzerkomponente, die zu matten Beschichtungen aushärten, sind bekannt (z.B. DE-A 3 238 129).

Matte Pulverbeschichtungen resultieren auch, wenn Hydroxylpolyester mit speziellen ε-Caprolactam-blockierten Derivaten von trans-1,4-Diisocyanatocyclohexan mit einem Schmelzbereich oberhalb 140°C (z.B. DE-A 37 11 374) oder mit ε-Caprolactam-blockierten harnstoffgruppenhaltigen Polyisocyanaten (z.B. DE-A 37 39 479), die durch Umsetzung teilblockierter Diisocyanate mit Di- oder Polyaminen erhalten werden können, vernetzt werden.

Die Verwendung von Kombinationen aus speziellen Carboxylgruppen aufweisenden blockierten Polyisocyanaten und Polyepoxidvernetzern, z. B. Triglycidylisocyanurat (TGIC), als Härterkomponente für pulverförmige hydroxyfunktionelle Bindemittel ist z.B. aus der DE-A 32 32 463 bekannt. Diese "3-Komponenten"-Pulverlacksysteme ergeben nach dem Einbrennen hoch wetterbeständige Beschichtungen mit reproduzierbar einstellbaren Matteffekten.

Diese PUR-Pulverlacke härten zwar zu matten Oberflächen aus, ihnen gemeinsam ist jedoch der prinzipielle Nachteil, daß sie als Vernetzerkomponenten blockierte Polyisocyanate enthalten, die beim Einbrennvorgang das Blockierungsmittel als sogenannten Abspalter freisetzen und an die Umgebung abgeben. Ihre Handhabung ist daher aufwendig (z.B. Luftreinigung, Wiedergewinnung).

Ein Versuch, diesen prinzipiellen Nachteil blockierter Polyisocyanatvernetzer zu beseitigen, ist in der Verwendung von blockierungsmittelfreien, linearen Uretdiongruppen-haltigen IPDI-Pulverlackhärtern zu sehen (z.B. EP-A 639 598), bei denen die Vernetzung unter thermischer Rückspaltung der Uretdiongruppen erfolgt. Es wurde bereits auch versucht, solche abspalterfreien Uretdion-Pulverlackhärter zur Herstellung matter Beschichtungen einzusetzen.

Die DE-A 33 28 133 beschreibt Polyadditionsverbindungen auf Basis eines IPDI-Uretdions mit Schmelzpunkten oberhalb 130°C, die in Kombination mit Polyesterpolyolen zu matten Filmen aushärten. Uretdionpulverlackvernetzer mit derart hohen Schmelzpunkten sind allerdings nur schwer zugänglich. Da bereits ab Temperaturen von etwa 110 °C eine deutliche Rückspaltung des Uretdionringes einsetzt, lassen sich solche Produkte nur in aufwendigen Verfahren in Lösung mit nachfolgendem Ausdampfschritt herstellen. Auch bei der Formulierung des fertigen Pulverlackes, bei der die beiden Reaktionspartner Polyol und Härter im allgemeinen durch Schmelzextrusion vermischt werden, darf eine Temperatur von 80 bis 110 °C nicht überschritten werden, um eine vorzeitige Vernetzung zu vermeiden. Unter derart milden Extrusionsbedingungen ist aber eine völlig homogene Einarbeitung der besonders hochschmelzenden Vernetzer in die Bindemittelkomponente nicht möglich. Der hier erzielbare Matteffekt ist auf eine ungenügende Durchmischung der beiden Reaktionspartner zurückzuführen. Aufgrund der im Lackpulver vorliegenden Inhomogenitäten weisen die erhaltenen Beschichtungen nur unbefriedigende Oberflächeneigenschaften auf.

Aus der EP-A 553 750 sind Pulverlacke aus einem Gemisch zweier Hydroxylpolyester unterschiedlicher OH-Zahl und Reaktivität und abspalterfreien Uretdion-Pulverlackvernetzern auf IPDI-Basis zur Herstellung matter Überzüge bekannt. Dieses Verfahren ist jedoch auf die Verwendung sehr spezieller Polyesterpolyole beschränkt.

Es war daher die Aufgabe der Erfindung, neue abspalterfreie PUR-Pulverlacke zur Verfügung zu stellen, die zu lösemittel- und chemikalienbeständigen Beschichtungen mit reproduzierbar einstellbaren niedrigen Glanzgraden aushärten.

Diese Aufgabe konnte mit der Bereitstellung der erfindungsgemäßen Pulverlacke gelöst werden. Die erfindungsgemäßen Pulverlacke beruhen auf der überraschenden Beobachtung, daß Polyurethan-Pulverlacke, bestehend aus einem Polyesterpolyol und einem Uretdiongruppen-haltigen Pulverlackvernetzer, die im allgemeinen zu hochglänzenden Lackfilmen einbrennen, völlig matte Beschichtungen ergeben, wenn man der Formulierung zusätzlich eine Kombination aus einer Carboxyl- und/oder Carbonsäureanhydridgruppen aufweisenden Vernetzerkomponente und einer weiteren, gegenüber Carboxyl- und/oder Carbonsäureanhydridgruppen reaktive Gruppen aufweisenden Vernetzerkomponente hinzufügt und alle Komponenten durch Schmelzextrusion homogenisiert.

Dies war überrraschend, da Pulverlacke, bestehend aus Polyesterpolyol, Uretdionhärter und nur einer weiteren, beispielsweise nur einer Carboxyl- und/oder Carbonsäureanhydridgruppen aufweisenden Vernetzerkomponente oder nur einer Carboxyl- und/oder Carbonsäureanhydridgruppen reaktiven Vernetzerkomponente hochglänzende Beschichtungen liefern, und auch die Kombination aus einer Carboxyl- und/oder Carbonsäureanhydridgruppen aufweisender und einer gegenüber Carboxyl- und/oder Carbonsäureanhydridgruppen reaktive Gruppen aufweisender Komponente für sich alleine einen glänzenden Film ergibt.

Es war daher keineswegs zu erwarten, daß die erfindungsgemäßen Pulverlacke zu matten Oberflächen aushärten, insbesondere deshalb nicht, weil bekannt ist, daß der Zusatz einer Kombination aus einem hochmolekularen Carboxylgruppen aufweisenden Pulverlackbindemittel und einer gegenüber diesem Bindemittel reaktiven Komponente, beispielsweise einem Polyepoxidvernetzer, zu einem Polyurethanpulverlack ebenfalls ein glänzend aushärtendes Beschichtungsmaterial liefert. Ungeachtet der oben beschriebenen Nachteile ist es in der Praxis zwar durchaus üblich, matte Pulverbeschichtungsmittel nach dem in den DE-A 2 147 653 und 2 247 779 beschriebenen Verfahren durch "trockenes" Mischen und anschließendes gemeinsames Vermahlen zweier getrennt formulierter Pulverlacke unterschiedlicher chemischer Basis und Reaktivität, beispielsweise eines Polyurethanpulverlackes und eines zweiten, beispielsweise aus einem Carboxylpolyester und einem Polyepoxidvernetzer bestehenden Pulverlackes, herzustellen, die Homogenisierung der beiden Reaktivsysteme durch Schmelzextrusion ergibt jedoch immer Pulverlacke von hohem Glanz.

Gegenstand der Erfindung ist ein Pulverlack zur Herstellung matter Beschichtungen, enthaltend
A) eine unterhalb von 40 °C in fester und oberhalb von 130 °C in flüssiger Form vorliegende Hydroxylgruppen aufweisende Bindemittelkomponente mit einer OH-Zahl von 25 bis 200 und einem mittleren (aus der Funktionalität und dem Hydroxylgehalt berechenbaren) Molekulargewicht von 400 bis 10000,
B) eine unterhalb von 40 °C in fester und oberhalb von 125 °C in flüssiger Form vorliegende Uretdiongruppen und gegebenenfalls freie Isocyanatgruppen aufweisende Polyadditionsverbindung auf Basis aliphatischer und/oder cycloaliphatischer Diisocyanate,
C) eine unterhalb von 40 °C in fester und oberhalb von 160 °C in flüssiger Form vorliegende Carboxyl- und/oder Carbonsäureanhydridgruppen aufweisende Komponente, bestehend aus mindestens einer Komponente ausgewählt aus
   C1) aliphatischen und/oder cycloaliphatischen Dicarbonsäuren mit 4 bis 20 Kohlenstoffatomen,
   C2) monomeren und/oder polymeren gegebenenfalls modifizierten Anhydriden derartiger Dicarbonsäuren und
   C3) aliphatischen Hydroxycarbonsäuren mit 4 bis 18 Kohlenstoffatomen,
D) eine gegenüber Carboxyl- und/oder Carbonsäureanhydridgruppen reaktive Gruppen aufweisende Komponente eines mittleren Molekulargewichtes von 200 bis 5000,
   und gegebenenfalls
E) aus der Pulverlacktechnologie bekannte Hilfs- und Zusatzstoffe,
mit der Maßgabe, daß die Komponenten A), B), C) und D) in solchen Mengenverhältnissen vorliegen, daß auf jede Hydroxylgruppe der Komponente A) von 0,6 bis 1,4 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, auf jedes Carboxyl-Äquivalent der Komponente C) von 0,3 bis 1,5 gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht, und der Anteil der Komponenten C) und D) an der Gesamtmenge der Komponenten A), B), C) und D) von 10 bis 40 Gew.-% beträgt.

Gegenstand der Erfindung ist auch die Verwendung dieses Pulverlackes zur Beschichtung hitzeresistenter Substrate.

Bei der in den erfindungsgemäßen Pulverlacken enthaltenen Komponente A) handelt es sich um beliebige aus der Pulverlacktechnologie bekannte Hydroxylgruppen aufweisende Bindemittel mit einer Hydroxylzahl von 25 bis 200, vorzugsweise von 30 bis 150, einem mittleren (aus der Funktionalität und dem Hydroxylgehalt berechenbaren) Molekulargewicht von 400 bis 10000, vorzugsweise von 1000 bis 5000, die unterhalb von 40 °C fest und oberhalb 130°C flüssig sind.

Derartige Bindemittel sind beispielsweise hydroxylgruppenhaltige Polyester, Polyacrylate oder Polyurethane, wie sie z.B. in der EP-A 45 998 und 254 152, als Pulverlackbindemittel beschrieben sind, aber auch beliebige Abmischungen solcher Harze.

Bevorzugt handelt es sich bei der Komponente A) um hydroxylgruppenhaltige Polyester, deren Erweichungstemperatur - bestimmt nach der Differential-Thermoanalyse (DTA) - innerhalb des Temperaturbereiches von 40 bis 120 °C, besonders bevorzugt innerhalb des Temperaturbereiches von 45 bis 110 °C, liegt.

Bei der in den erfindungsgemäßen Pulverlacken enthaltenen Komponente B) handelt es sich um Uretdiongruppen und gegebenenfalls freie Isocyanatgruppen aufweisende Polyadditionsverbindungen auf Basis aliphatischer und/oder cycloaliphatischer Diisocyanate, insbesondere um solche auf Basis von 1,6-Hexamethylendiisocyanat (HDI), 1-Isocyanato-3,3,5-trimethyl-5-isocyanatomethylcyclohexan (Isophorondiisocyanat, IPDI), 4,4'-Diisocyanatodicyclohexylmethan oder beliebigen Gemischen dieser Diisocyanate.

Die als Komponente B) in Betracht kommenden Uretdiongruppen und gegebenenfalls freie Isocyanatgruppen aufweisenden Polyadditionsverbindungen weisen im allgemeinen einen Gehalt an Uretdiongruppen (berechnet als C₂N₂O₂, Molekulargewicht = 84) von 3 bis 17 Gew.-% auf. Der Schmelzpunkt bzw. Schmelzbereich dieser Verbindungen liegt im allgemeinen innerhalb des Temperaturbereiches von 40 bis 125 °C.

Die Herstellung solcher Polyadditionsverbindungen durch Umsetzung Uretdiongruppen aufweisender Polyisocyanate mit gegenüber Isocyanatgruppen reaktiven difunktionellen und gegebenenfalls monofunktionellen Verbindungen, insbesondere zweiwertigen und gegebenenfalls einwertigen Alkoholen ist prinzipiell bekannt (z.B. DE-A 2 420 475, EP-A 45 996, 45 998).

Als Komponente B) besonders bevorzugte Uretdiongruppen aufweisende Polyadditionsverbindungen sind solche, die
einen Gehalt an freien Isocyanatgruppen (berechnet als NCO; Molekulargewicht = 42) von 0 bis 2 Gew.-%,
einen Gehalt an Uretdiongruppen (berechnet als C₂N₂O₂; Molekulargewicht = 84) von 3 bis 16 Gew.-%,
einen Gehalt an Urethangruppen (berechnet als CHNO₂; Molekulargewicht = 59) von 10 bis 22 Gew.-%,
einen Gehalt an Carbonsäureestergruppen (berechnet als CO₂; Molekulargewicht = 44) von 0 bis 20 Gew.-%
   und/oder
einen Gehalt an Carbonatgruppen (berechnet als CO₃; Molekulargewicht = 60) von 0 bis 25 Gew.-%
aufweisen, mit der Maßgabe, daß der Gesamtgehalt an Carbonsäureester- und Carbonatgruppen mindestens 1 Gew.-% beträgt.

Die Herstellung solcher Uretdiongruppen aufweisender Polyadditionsverbindungen geschieht z.B. gemäß der EP-A 639 598 durch Umsetzung von
I) Uretdiongruppen aufweisenden Polyisocyanaten einer mittleren Isocyanatfunktionalität von 2,0, gegebenenfalls unter Mitverwendung von
II) weiteren Diisocyanaten in einer Menge von bis zu 70 Gew.-%, bezogen auf das Gesamtgewicht der Komponenten I) und II), mit
III) Estergruppen und/oder Carbonatgruppen aufweisenden Diolen eines mittleren Molekulargewichts von 134 bis 1200, gegebenenfalls unter gleichzeitiger Mitverwendung von
IV) Estergruppen- und Carbonatgruppen-freien Diolen eines Molekulargewichtsbereichs von 62 bis 300 in einer Menge von bis zu 80 Gew.-%, bezogen auf das Gesamtgewicht der Komponenten III) und IV), und/oder gegebenenfalls
V) weiteren gegenüber Isocyanatgruppen reaktiven, monofunktionellen Verbindungen in einer Menge von bis zu 40 Gew.-%, bezogen auf das Gesamtgewicht der Komponenten III), IV) und V)
unter Einhaltung eines Äquivalentverhältnisses von Isocyanatgruppen zu gegenüber Isocyanaten reaktiven Gruppen von 1,2:1 bis 0,6:1.

Die Komponente B) wird in dem erfindungsgemäßen Pulverlack in solchen Mengen eingesetzt, daß auf jede Hydroxylgruppe der Bindemittelkomponente A) von 0,6 bis 1,4, vorzugsweise von 0,8 bis 1,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird.

Bei der in den erfindungsgemäßen Pulverlacken enthaltenen Komponente C) handelt es sich um Carboxyl- und/oder Carbonsäureanhydridgruppen aufweisende Komponenten, bestehend aus mindestens einer Komponente ausgewählt aus
C1) aliphatischen und/oder cycloaliphatischen Dicarbonsäuren mit 4 bis 20 Kohlenstoffatomen,
C2) monomeren und/oder polymeren gegebenenfalls modifizierten Anhydriden derartiger Dicarbonsäuren und
C3) aliphatischen Hydroxycarbonsäuren mit 4 bis 18 Kohlenstoffatomen.

Geeignete Dicarbonsäuren C1) sind beispielsweise Bernsteinsäure, Glutarsäure, Adipinsäure, Pimelinsäure, Suberinsäure, Azelainsäure, Sebacinsäure, Dodecandisäure (1,10-Decandicarbonsäure) oder Hexahydrophthalsäure.

Geeignete Komponenten C2) sind beispielsweise monomere Anhydride derartiger Dicarbonsäuren, wie Bernsteinsäure-, Glutarsäure- oder Hexahydrophthalsäureanhydrid, oder polymere Anhydride derartiger Dicarbonsäuren, wie sie durch intermolekulare Kondensation der genannten Säuren oder deren Gemische erhalten werden können. Konkrete Beispiele sind Adipinsäure-(poly)anhydrid, Azelainsäure(poly)anhydrid, Sebacinsäure(poly)anhydrid oder Dodecandisäure(poly)anhydrid. Das gelpermeationschromatographisch unter Verwendung von Polystyrol als Standard ermittelte Molekulargewicht Mw dieser Polyanhydride liegt im allgemeinen bei 1000 bis 5000. Die Herstellung der Polyanhydride erfolgt beispielsweise durch Reaktion der Dicarbonsäuren bzw. der Dicarbonsäuregemische mit Essigsäureanhydrid bei Temperaturen von 120 bis 200 °C, vorzugsweise 120 bis 170 °C. Die dabei abgespaltene Essigsäure wird beispielsweise durch Destillation unter Vakuum entfernt.

Geeignete Komponenten C2) sind auch modifizierte Anhydride der unter C1) genannten Dicarbonsäuren, beispielsweise Polyol-modifizierte Polyanhydride, wie sie gemäß der EP-A 299 420 zugänglich sind. In diesen Polyol-modifizierten Polyanhydriden liegt das Molverhältnis von Anhydridgruppen zu Carboxylgruppen im allgemeinen bei 0,04:1 bis 5:1, vorzugsweise 1:1 bis 3:1.

Geeignete Komponenten C) stellen auch Polyisocyanat-modifizierte Polyanhydride dar, wie sie gemäß DE-A 4 427 225 durch Umsetzung von Dicarbonsäuren und/oder Dicarbonsäure(poly)anhydriden mit beliebigen organischen Polyisocyanaten und gegebenenfalls weiteren gegenüber Anhydridgruppen reaktive Amino- und/oder Hydroxylgruppen aufweisenden Verbindungen erhältlich sind.

Solche Polyisocyanat-modifizierten Dicarbonsäure(poly)anhydride weisen im allgemeinen einen Gehalt an Carboxylgruppen (berechnet als CO₂H; Molekulargewicht = 45) von 0,5 bis 30 Gew.-%, einen Gehalt an Carbonsäureanhydridgruppen (berechnet als C₂O₃; Molekulargewicht = 72) von 5 bis 35 Gew.-% und einen Gehalt an in Amid- und/oder Harnstoffgruppen gebunden vorliegendem Stickstoff von 0,2 bis 8 Gew.-% auf.

Geeignete Hydroxycarbonsäuren C3) sind insbesondere solche, die einen zwischen 40 und 150 °C liegenden Schmelzpunkt aufweisen. Hierzu gehören beispielsweise 2-Hydroxyisobuttersäure (81 °C), 2-Hydroxyhexansäure (61 °C), 10-Hydroxydecansäure (76 °C), 12-Hydroxydodecansäure (86 °C), 16-Hydroxyhexadecansäure (98 °C) und 12-Hydroxyoctadecansäure (80 °C).

Diese Hydroxycarbonsäuren werden im allgemeinen nur in Kombination mit vorzugsweise nicht modifizierten Polyanhydriden C2) in Mengen von bis zu 50 Gew.-%, bezogen auf das Gewicht der Polyanhydride, eingesetzt.

Besonders bevorzugt besteht die Komponente C) ausschließlich aus mindestens einer gesättigten aliphatischen Dicarbonsäure mit 4 bis 12 Kohlenstoffatomen, einem monomeren oder polymeren Anhydrid solcher Dicarbonsäuren oder einem durch aliphatische und/oder cycloaliphatische Polyisocyanate modifizierten Polyanhydrid derartiger Dicarbonsäuren.

Bei der in den erfindungsgemäßen Pulverlacken enthaltenen Komponente D) handelt es sich um gegenüber Carboxyl- und/oder Carbonsäureanhydridgruppen reaktive Gruppen aufweisende Verbindungen eines mittleren Molekulargewichtes von 200 bis 5000, vorzugsweise von 200 bis 2000, besonders bevorzugt von 250 bis 1000, wie sie in der Pulverlacktechnologie im allgemeinen als Vernetzerkomponenten für carboxylgruppenhaltige Pulverlackbindemittel zum Einsatz kommen.

Geeignete Komponenten D) sind beispielsweise die an sich bekannten Polyepoxide, wie Triglycidylisocyanurat (TGIC) und Triglycidylurazol oder deren Oligomeren, Glycidylether, wie z. B. solche auf Basis von Bisphenol A, aber auch Glycidylester, wie z. B. die der Phthalsäure, Tetrahydro- und Hexahydrophthalsäure, oder beliebige Gemische solcher Polyepoxide.

Geeignete Komponenten D) sind beispielsweise auch β-Hydroxyalkylamidgruppen aufweisende Verbindungen, wie sie in der EP-A 322 834 als Vernetzerkomponenten für carboxylgruppenhaltige Polyester beschrieben sind. Die Herstellung solcher β-Hydroxyalkylamide erfolgt im allgemeinen durch basenkatalysierte Umsetzung organischer Polycarbonsäureester mit β-Hydroxyalkylaminen bei Temperaturen bis zu 200°C unter gleichzeitigem destillativen Entfernen des dabei entstehenden Alkohols.

Bevorzugt kommen in den erfindungsgemäßen Pulverlacken als Komponente D) TGIC und/oder dessen Oligomere oder β-Hydroxyalkylamide auf Basis gesättigter Dicarbonsäureester mit 4 bis 12 Kohlenstoffatomen im Dicarbonsäureteil zum Einsatz. Besonders bevorzugt besteht die Komponente D) aus einem β-Hydroxyalkylamid, wie es durch Umsetzung von Diethanolamin mit einem Gemisch aus 9 Gew.-Teilen Adipinsäuredimethylester und 1 Gew.-Teil Glutarsäuredimethylester halten wird.

Die Komponente D) wird in dem erfindungsgemäßen Pulverlack in solchen Mengen eingesetzt, daß auf jedes Carboxyl-Äquivalent der Komponente C) von 0,3 bis 1,5, vorzugsweise 0,4 bis 1,2, gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht.

Der Anteil der Komponenten C) und D) an der Gesamtmenge der Komponenten A), B), C) und D) beträgt in den erfindungsgemäßen Pulverlacken von 10 bis 40 Gew.-%, vorzugsweise von 15 bis 35 Gew.-%.

Gegebenenfalls kann der erfindungsgemäße Pulverlack auch die üblichen aus der Pulverlacktechnologie bekannten Hilfs- und Zusatzstoffe E) enthalten. Hierbei handelt es sich beispielsweise um Katalysatoren, wie z. B. Zinn(II)hexanoat, Zinn(II)octanoat, Zinn(II)laurat, Dibutylzinnoxid, Dibutylzinnchlorid, Dibutylzinndiacetat, Dibutylzinndilaurat, Dibutylzinnmaleat, Dioctylzinndiacetat, 1,4-Diazabicyclo[2.2.2]octan, 1,5-Diazabicyclo[4.3.0]non-5-en oder 1,8-Diazabicyclo[5.4.0]-undec-7-en. Gegebenenfalls kommen auch Katalysatorgemische zum Einsatz. Weitere Vertreter von geeigneten Katalysatoren sowie Einzelheiten über die Wirkungsweise von solchen Katalysatoren sind beispielsweise im Kunststoffhandbuch Band VII, Hrsg. Vieweg und Höchtlen, Carl-Hanser-Verlag, München 1966, Seite 96 bis 102 beschrieben. Katalysatoren als Zusatzmittel E) kommen, falls überhaupt, in Anteilen von 0,1 bis 5 Gew.-%, vorzugsweise 0,1 bis 3 Gew.-%, bezogen auf die Summe der Komponenten A), B), C) und D) zum Einsatz.

Weitere Hilfs- und Zusatzmittel E) sind beispielsweise auch Verlaufsmittel wie z. B. Polybutylacrylat oder solche auf Basis von Polysilikonen, Lichtschutzmittel, wie z. B. sterisch gehinderte Amine, UV-Absorber, wie z. B. Benztriazole oder Benzophenone und Pigmente, wie z. B. Titandioxid.

Zu den oftmals, gegebenenfalls neben weiteren Hilfs- und Zusatzmitteln, eingesetzten Zusatzmitteln E) gehören insbesondere auch Farbstabilisatoren gegen die Gefahr der Überbrennvergilbung. Geeignet sind insbesondere, gegebenenfalls inerte Substituenten aufweisende, Trialkyl- und/oder Triarylphosphite wie beispielsweise Triethylphosphit, Triphenylphosphit oder bevorzugt Trisalkylphenylphosphite, wobei die Alkylsubstituenten 6 bis 12 Kohlenstoffatome aufweisen. Ganz besonders bevorzugt ist Trisnonylphenylphosphit (technisches Produkt, bestehend im wesentlichen aus einem Ester der phosphorigen Säure mit dem Anlagerungsprodukt von Tripropylen an Phenol).

Zur Herstellung des fertigen Pulverlackes werden die Bestandteile A), B), C), D) und gegebenenfalls E) innig miteinander vermischt und anschließend in der Schmelze zu einem homogenen Material vereinigt. Dies kann in geeigneten Aggregaten, beispielsweise beheizbaren Knetern, vorzugsweise jedoch durch Schmelzextrusion erfolgen, wobei die Extrusionstemperatur im allgemeinen so gewählt wird, daß ein Maximum an Scherkräften auf die Mischung einwirkt. Um eine vorzeitige Vernetzung des Pulverlackes zu vermeiden, sollte dabei allerdings eine Temperaturobergrenze von 110 °C nicht überschritten werden.

Die Reihenfolge der Vereinigung der Einzelkomponenten A) bis E) ist bei diesem Verfahren weitgehend frei wählbar.

Eine im Sinne der Erfindung bevorzugte Art zur Herstellung eines fertigen Pulverlackes ist es beispielsweise, in einem ersten Schritt nur zwei der Einzelkomponenten, beispielsweise nur die Komponenten B) und C), in Schmelze, vorzugsweise unmittelbar im Anschluß an die Herstellung einer der Komponenten B) oder C), miteinander zu vermischen und erst zu einem späteren Zeitpunkt, in einem zweiten Schritt, zu dem resultierenden, aus den Komponenten B) und C) bestehenden lagerstabilen homogenen Material die übrigen Komponenten hinzuzufügen und gemeinsam zu extrudieren.

Unabhängig vom gewählten Verfahren werden die Mengenverhältnisse der Einzelkomponenten A), B), C) und D), wie bereits oben aufgeführt, im übrigen so gewählt, daß auf jede Hydroxylgruppe der Komponente A) von 0,6 bis 1,4, vorzugsweise von 0,8 bis 1,2 Isocyanatgruppen der Komponente B), wobei unter Isocyanatgruppen der Komponente B) die Summe aus in dimerer Form als Uretdiongruppen vorliegenden Isocyanatgruppen und freien Isocyanatgruppen verstanden wird, und auf jedes Carboxyl-Äquivalent der Komponente C) von 0,3 bis 1,5, vorzugsweise von 0,4 bis 1,2, gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht Gegebenenfalls in den Komponenten C) und/oder D) zusätzlich enthaltene Hydroxylgruppen bleiben bei der Wahl der Mengenverhältnisse der Einzelkomponenten unberücksichtigt. Das genannte NCO/OH-Äquivalentverhältnis bezieht sich ausschließlich auf das mengenmäßige Verhältnis von Komponente A) zu Komponente B).

Die extrudierte Masse wird nach Abkühlen auf Raumtemperatur und nach einer geeigneten Vorzerkleinerung zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z. B. elektrostatischem Pulversprühen oder Wirbelsintern, auf die zu überziehenden Substrate aufgebracht werden. Die Härtung der Überzüge erfolgt durch Erhitzen auf Temperaturen von 110 bis 220 °C, vorzugsweise 130 bis 200 °C, beispielsweise während eines Zeitraums von ca. 10 bis 30 Minuten. Man erhält völlig matte, harte und elastische Beschichtungen, die sich durch einen hervorragenden Verlauf sowie gute Lösemittel- und Chemikalienbeständigkeit auszeichnen.

Erfindungsgemäß können beliebige hitzeresistente Substrate, (z.B. Glas, Metalle, Kunststoffe) beschichtet werden.

### Beispiele

### Alle %-Angaben sind Gew.-%.

### Herstellung der Ausgangskomponenten

### Uretdiongruppenhaltige Polyadditionsverbindung B-a)

### a) Herstellung eines Estergruppen aufweisenden Diols:

901 g 1,4-Butandiol und 1712 g ε-Caprolacton werden bei Raumtemperatur unter Stickstoffatmosphäre vermischt, mit 0,3 g Zinn(II)octoat versetzt und anschließend 5 Stunden auf 160 °C erhitzt. Nach Abkühlen auf Raumtemperatur erhält man ein farbloses, flüssiges Produkt mit folgenden Kenndaten:

| | |
|---|---|
| η (23 °C) | 180 mPas |
| OH-Zahl | 416 mg KOH/g |
| freies Caprolacton | 0,2 % |
| mittleres Molekulargewicht (aus OH-Zahl ber.) | 269 |
| Estergruppengehalt (ber.) | 25,3 % |

### b) Herstellung der Estergruppen- und Uretdiongruppen aufweisenden Komponente B-a):

1000 g (4,3 val) eines uretdiongruppenhaltigen Polyisocyanates auf Basis von 1-Isocyanato-3,3,5-trimethyl-5-isocyanatomethyl-cyclohexan (IPDI) mit einem Gehalt an freien Isocyanatgruppen von 17,9 % und einem Gehalt an Uretdiongruppen (bestimmt durch Heißtitration) von 19,1 % werden unter trockenem Stickstoff auf 80°C erwärmt. Anschließend gibt man innerhalb von 30 Min. eine Mischung von 457 g (3,4 val) des Estergruppen aufweisenden Diols aus a) und 117 g (0,9 val) 2-Ethyl-1-hexanol zu und rührt bei einer Reaktionstemperatur von max. 105 °C, bis der NCO-Gehalt des Reaktionsgemisches nach ca. 2 h auf einen Wert von 0,7 % abgesunken ist.

Die Schmelze wird zum Erkalten auf ein Blech gegossen und man erhält ein praktisch farbloses Festharz mit folgenden Kenndaten:

| | |
|---|---|
| NCO-Gehalt | 0,7 % |
| Uretdiongruppen-Gehalt (ber.) | 12,1 % |
| NCO-Gehalt gesamt (ber.) | 12,8 % |
| Schmelzpunkt | 82 bis 83 °C |

### Uretdiongruppenhaltige Polyadditionsverbindungen B-b)

1000 g (4,3 val) des zur Herstellung von Komponente B-a) eingesetzten uretdiongruppenhaltigen Polyisocyanates werden in 1270 g wasserfreiem Toluol bei 80°C unter trockenem Stickstoff vorgelegt. Man gibt innerhalb von 30 min eine Mischung von 153 g (3,4 val) 1,4-Butandiol und 117 g (0,9 val) 2-Ethyl-1-hexanol zu und rührt bei einer Reaktionstemperatur von 100 °C bis der NCO-Gehalt auf einen Wert von 0,2 % abgesunken ist. Die erhaltene gelbliche Lösung wird anschließend durch Sprühtrocknung in einem handelsüblichen Laborsprühtrockner Minispray Dryer 190 (Fa. Büchi) vollständig vom Lösungsmittel befreit. Man erhält ein blaßgelbes Produkt mit folgenden Kenndaten:

| | |
|---|---|
| NCO-Gehalt | 0,3 % |
| Uretdiongruppen-Gehalt (ber.) | 15,0 % |
| NCO-Gehalt gesamt (ber.) | 15,3 % |
| Schmelzpunkt | 105 bis 111 °C |

### Polyisocyanat-modifiziertes Polyanhydrid C2-a) (analog DE-A 4 427 225)

1000 g (8,7 val) Dodecandisäure werden unter Stickstoff mit 200 g (1,0 val) eines Isocyanuratgruppen aufweisenden Polyisocyanates auf Basis von Hexamethylendiisocyanat mit einem Isocyanatgehalt von 21,5 % und einer Viskosität bei 23°C von 3000 mPas sowie 240 g (2,4 mol) Acetanhydrid gemischt, auf 125°C erwärmt und 4 h bei dieser Temperatur nachgerührt. Anschließend wird die entstandene Essigsäure im schwachen N₂-Strom abdestilliert und man erhält ein farbloses kristallines Produkt mit einem Schmelzbereich (DTA) von 84 bis 104 °C, einem Gehalt an Carboxylgruppen (berechnet als CO₂H; Molekulargewicht = 45) von 11,8 %, an Carbonsäureanhydridgruppen (berechnet als C₂O₃; Molekulargewicht = 72) von 15,6 % und an in Form von Amid- und/oder Harnstoffgruppen vorliegendem Stickstoff von 1,3 %. Das Äquivalentgewicht berechnet sich zu 144 g/Carboxyl-Äquivalent.

### Mischung aus uretdiongruppenhaltiger Polyadditionsverbindung B-a) und Polyisocyanat-modifiziertem Polyanhydrid C2-a)

Im Anschluß an die oben beschriebene Herstellung der uretdiongruppenhaltigen Polyadditionsverbindung B-a) gibt man nach Erreichen eines freien NCO-Gehaltes von 0,8 % bei einer Temperatur von 105°C portionsweise festes Polyisocyanat-modifiziertes Polyanhydrid C2-a) in einer Menge von 40 %, bezogen auf die Gesamtmenge der beiden Komponenten B-a) und C2-a), in das Reaktionsgemisch und rührt nach vollständigem Aufschmelzen des Polyanhydrids noch etwa 10 bis 15 min bei dieser Temperatur nach. Die Schmelze wird zum Erkalten auf ein Blech gegossen und man erhält ein lagerstabiles, fast farbloses Festharz mit folgenden Kenndaten:

| | |
|---|---|
| NCO-Gehalt | 0,5 % |
| Uretdiongruppen-Gehalt (ber.) | 7,3 % |
| NCO-Gehalt gesamt (ber.) | 7,8 % |
| Äquivalent-Gew. (Carboxyl-Äquivalent). | 360 g/val |
| Schmelzpunkt | 69 bis 72 °C |

### β-Hydroxyalkylamid D-a)

900 g (5,2 mol) Adipinsäuredimethylester werden mit 100 g (0,6 mol) Glutarsäuredimethylester, 1460 g (13,9 mol) Diethanolamin und 5 g Kaliumhydroxid in einem Rührgefäß mit Destillationsaufsatz gemischt und auf eine Temperatur von 100 - 110°C erwärmt. Dabei destilliert das entstehende Methanol aus der Reaktionsmischung ab. Nachdem etwa 200 g Methanol abgetrennt sind, wird an die Reaktionsapparatur ein Vakuum von etwa 150 mbar angelegt, worauf weitere etwa 100 g Methanol abdestillieren.

Anschließend wird die Destillationsbrücke entfernt und die Reaktionsmischung mit 350 g frischem Methanol und 2 l Aceton versetzt. Der ausfallende Niederschlag wird abgesaugt, mit Aceton nachgewaschen und getrocknet. Man erhält ein blaß gelbes Pulver mit einem Schmelzpunkt von 118 bis 120°C. Das Äquivalentgewicht beträgt 80 g/val Hydroxyethylamidgruppen.

### Beispiel 1

39,0 Gew.-Teile eines hydroxylgruppenhaltigen Polyesters, der aus 66,6 Gew.-Teilen Terephthalsäure, 38,2 Gew.-Teilen Neopentylglykol, 5,3-Gew.-Teilen 1,6-Hexandiol und 4,5 Gew.-Teilen 1,1,1-Trimethylolpropan hergestellt wurde und eine OH-Zahl von 50 und einen Schmelzbereich (bestimmt nach der Differential-Thermoanalyse) von 55 bis 60 °C aufweist, werden mit 11,4 Gew.-Teilen der uretdiongruppenhaltigen Polyadditionsverbindung B-a), entsprechend einem Äquivalentverhältnis von Gesamt-NCO zu OH von 1:1, 8,1 Gew.-Teilen des Polyisocyanat-modifizierten Polyanhydrids C2-a) und 4,5 Gew.-Teilen des β-Hydroxylamids D-a), entsprechend einem Äquivalentverhältnis von Carboxyl-Äquivalenten zu gegenüber Carboxyl- und/oder Carbonsäureanhydridgruppen reaktiven Gruppen von 1:1, 1,0 Gew.-Teilen eines handelsüblichen Verlaufsmittels auf Polybutylacrylatbasis (® Modaflow PIII; Fa. Monsanto), 1,0 Gew.-Teilen Zinn(II)octanoat als Katalysator und 35,0 Gew.-Teilen eines handelsüblichen Weißpigmentes (® Bayertitan R-KB-4; Bayer AG) gründlich gemischt und anschließend mit Hilfe eines Buss Cokneters vom Typ PLK 46 bei 150 U/min und einer Gehäusetemperatur von 60 °C im Einzugsbereich sowie an der Welle bzw. von 100°C im Verfahrensteil homogenisiert, wobei Massetemperaturen von 95 bis 105 °C erreicht werden. Die erstarrte Schmelze wird mit Hilfe einer Sichtermühler ACM 2 (Fa. Hosokawa Mikropul) mit einem 90 µm Sieb gemahlen und gesiebt. Das so erhaltene Pulver wird mit einer ESB Becherpistole bei einer Hochspannung von 70 kV auf ein entfettetes Stahlblech gespritzt und jeweils 30 min bei 170 und 185 °C zu glattverlaufenden, matten Weißlacken ausgehärtet.

Bei Schichtdicken von ca. 60 µm werden folgende lacktechnische Eigenschaften gefunden:

| | | 170 °C | 185 °C |
|---|---|---|---|
| ET^{a)} | | 9,0 | 9,0 |
| Glanz^{b)} | 20° | 2 | 4 |
| | 60° | 19 | 23 |
| Ac^{c)} | DH | 50 | 50 |
| | Urteil | 1 | 0 - 1 |

| | | | |
|---|---|---|---|
| ^{a)} ET = Erichsentiefung nach DIN 53 156 | | | |
| ^{b)} Glanz = Glanz nach Gardner; 20 ° bzw. 60 ° Reflexionswinkel | | | |
| ^{c)} Ac = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | | |

### Beispiele 2 - 6

Auf Basis des in Beispiel 1 beschriebenen hydroxylgruppenhaltigen Polyesters wurden nach dem in Beispiel 1 beschriebenen Verfahren Pulverlacke folgender Zusammensetzung (Gew.-Teile) hergestellt.

| Beispiel | 2 | 3 | 4 | 5 (Vergleich) | 6 (Vergleich) |
|---|---|---|---|---|---|
| Polyester gemäß Beispiel 1 | 38,6 | 33,3 | 41,7 | 44,3 | 46,2 |
| Polyadditionsverbindung B-a) | - | 9,7 | 12,2 | 13,0 | 13,5 |
| B-b) | 9,5 | - | - | - | - |
| Polyanhydrid C2-a) | - | 12,9 | 5,4 | 5,7 | - |
| Dodecandisäure | 8,8 | - | - | - | - |
| β-Hydroxyalkylamid D-a) | 6,1 | 7,1 | - | - | 3,3 |
| TGIC | - | - | 3,7 | - | - |
| Modaflow PIII | 1,0 | 1,0 | 1,0 | 1,0 | 1,0 |
| Zinn(II)octanoat | 1,0 | 1,0 | 1,0 | 1,0 | 1,0 |
| Bayertitan R-KB-4 | 35,0 | 35,0 | 35,0 | 35,0 | 35,0 |

Die Pulver werden mit einer ESB-Becherpistole bei einer Hochspannung von 70 kV auf entfettete Stahlbleche gespritzt und jeweils 30 min bei 185 °C ausgehärtet.

Bei Schichtdicken von 60 ± 5 µm werden folgende lacktechnische Eigenschaften gefunden:

| | | 2 | 3 | 4 | 5 (Vergleich) | 6 (Vergleich) |
|---|---|---|---|---|---|---|
| ET^{a)} | | 9,0 | > 9,0 | 9,0 | 0,5 | 0,5 |
| Glanz^{b)} | 20° | 3 | 3 | 11 | 35 | 21 |
| | 60° | 21 | 20 | 34 | 84 | 64 |
| Ac^{c)} | DH | 50 | 50 | 50 | 50 | 50 |
| | Urteil | 1 | 0 - 1 | 1 | 2 m | 2 m |

| | | | | | | |
|---|---|---|---|---|---|---|
| ^{a)} ET = Erichsentiefung nach DIN 53 156 | | | | | | |
| ^{b)} Glanz = Glanz nach Gardner; 20 ° bzw. 60 ° Reflexionswinkel | | | | | | |
| ^{c)} Ac = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | | | | | |

Die Vergleichsbeispiele zeigen, daß der Zusatz von nur einer weiteren, bsp. einer Carboxylgruppen und/oder Carbonsäureanhydridgruppen aufweisenden Komponente (Vergleichsbeispiel 5) oder nur einer gegenüber Carboxyl- und/oder Carbonsäureanhydridgruppen reaktive Gruppen aufweisenden Komponente (Vergleichsbeispiel 6) zu einem aus einem Polyesterpolyol und einer uretdiongruppenhaltigen Polyadditionsverbindung bestehenden Polyurethansystem zu Beschichtungen führt, die nicht matt sind, und nur mäßige Elastizitäten und Beständigkeitseigenschaften aufweisen.

### Beispiel 7 (Vergleich)

Aus 37,1 Gew.-Teilen des in Beispiel 1 beschriebenen hydroxylgruppenhaltigen Polyesters und 10,9 Gew.-Teilen der uretdiongruppenhaltigen Polyadditionsverbindung B-a), entsprechend einem Äquivalentverhältnis von Gesamt-NCO zu OH von 1:1, sowie 14,7 Gew.-Teilen eines carboxylgruppenhaltigen Polyesters, der aus 44,8 Gew.-Teilen Terephthalsäure, 6,8 Gew.-Teilen Isophthalsäure, 48,9 Gew.-Teilen Neopentylglykol und 0,5 Gew.-Teilen Pentaerythrit hergestellt wurde und eine Säurezahl von 15,5 und einen Schmelzbereich (bestimmt nach der Differential-Thermoanalyse) von 65 bis 70 °C aufweist, und 0,3 Gew.-Teile des β-Hydroxyalkylamids D-a), entsprechend einem Äquivalentverhältnis von Carboxylgruppen zu gegenüber Carboxylgruppen reaktiven Gruppen von 1:1, wird nach dem in Beispiel 1 beschriebenen Verfahren mit 1,0 Gew.-Teilen eines handelsüblichen Verlaufsmittels auf Polybutylacrylatbasis (® Modaflow PIII, Fa. Monsanto), 1,0 Gew.-Teilen Zinn(II)octanoat als Katalysator und 35,0 Gew.-Teilen eines handelsüblichen Weißpigmentes (® Bayertitan R-KB-4; Bayer AG) ein Weißlack hergestellt.

Das Pulver wird mit einer ESB Becherpistole bei einer Hochspannung von 70 kV auf ein entfettetes Stahlblech gespritzt und 30 min bei 185 °C ausgehärtet.

Man erhält einen glänzenden Lackfilm, der bei einer Schichtdicke von ca. 65 µm folgende Eigenschaften aufweist:

| | | |
|---|---|---|
| ET^{a)} | | 9,0 |
| Glanz^{b)} | 20° | 63 |
| | 60° | 89 |
| Ac^{c)} | DH | 50 |
| | Urteil | 2 |

| | | |
|---|---|---|
| ^{a)} ET = Erichsentiefung nach DIN 53 156 | | |
| ^{b)} Glanz = Glanz nach Gardner; 20 ° bzw. 60 ° Reflexionswinkel | | |
| ^{c)} Ac = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | |

Das Vergleichsbeispiel zeigt, daß der Zusatz einer Kombination aus einem hochmolekularen Carboxylpolyester und einem gegenüber Carboxylgruppen reaktiven Vernetzer zu einem aus einem Polyesterpolyol und einer uretdiongruppenhaltigen Polyadditionsverbindung bestehenden Polyurethansystem nicht zu einer matten, sondern zu einer glänzenden Beschichtung führt, die darüberhinaus eine nur mäßige Lösemittelbeständigkeit aufweist.

### Beispiel 8

Aus 39,7 Gew.-Teilen des in Beispiel 1 beschriebenen hydroxylgruppenhaltigen Polyesters, 19,1 Gew.-Teilen der nach dem oben beschriebenen Verfahren hergestellten Mischung der uretdiongruppenhaltigen Polyadditionsverbindung B-a) mit dem Polyisocyanat-modifizierten Polyanhydrid C2-a) und 4,2 Gew.-Teilen des β-Hydroxyalkylamids D-a), entsprechend einem Äquivalentverhältnis von Gesamt-NCO zu OH und Carboxyl-Äquivalenten zu gegenüber Carboxyl- und/oder Carbonsäureanhydridgruppen reaktiven Gruppen von jeweils 1:1, wird nach dem in Beispiel 1 beschriebenen Verfahren mit 1,0 Gew.-Teilen eines handelsüblichen Verlaufsmittels auf Polyacrylatbasis (® Modaflow PIII; Fa. Monsanto), 1,0 Gew.-Teilen Zinn(II)octanoat als Katalysator, 1,1 Gew.-Teilen Flammruß 101 (Fa. Degussa) sowie 33,9 Gew.-Teilen eines handelsüblichen Füllstoffs (Blanc Fix M, Fa. Sachtleben) ein schwarz pigmentierter Pulverlack hergestellt. Das Pulver wird anschließend mit einer ESB Becherpistole bei einer Hochspannung von 70 kV auf ein entfettetes Stahlblech gespritzt und 30 min bei 185 °C ausgehärtet. Die erhaltene schwarzmatte Beschichtung zeigt folgende lacktechnische Eigenschaften (Schichtdicke: ca. 70 µm):

| | | |
|---|---|---|
| ET^{a)} | | > 9,0 |
| Glanz^{b)} | 20° | 2 |
| | 60° | 21 |
| Ac^{c)} | DH | 50 |
| | Urteil | 0 - 1 |

| | | |
|---|---|---|
| ^{a)} ET = Erichsentiefung nach DIN 53 156 | | |
| ^{b)} Glanz = Glanz nach Gardner; 20 ° bzw. 60 ° Reflexionswinkel | | |
| ^{c)} Ac = Acetontest; DH = Anzahl der Doppelhübe mit getränktem Wattebausch Urteil = 0 = Film intakt 1 = Filmoberfläche angeweicht 2 = Film bis zum Untergrund angequollen | | |

## Patentansprüche

1. Pulverlack, enthaltend
A) eine unterhalb von 40 °C in fester und oberhalb von 130°C in flüssiger Form vorliegende Hydroxylgruppen aufweisende Bindemittelkomponente mit einer OH-Zahl von 25 bis 200 und einem mittleren (aus der Funktionalität und dem Hydroxylgehalt berechenbaren) Molekulargewicht von 400 bis 10000,
B) eine unterhalb von 40 °C in fester und oberhalb von 125 °C in flüssiger Form vorliegende Uretdiongruppen und gegebenenfalls freie Isocyanatgruppen aufweisende Polyadditionsverbindung auf Basis aliphatischer und/oder cycloaliphatischer Diisocyanate,
C) eine unterhalb von 40 °C in fester und oberhalb von 160 °C in flüssiger Form vorliegende Carboxyl- und/oder Carbonsäureanhydridgruppen aufweisende Komponente, bestehend aus mindestens einer Komponente ausgewählt aus
C1) (cyclo)aliphatischen Dicarbonsäuren mit 4 bis 20 Kohlenstoffatomen,
C2) monomeren und/oder polymeren gegebenenfalls modifizierten Anhydriden derartiger Dicarbonsäuren und
C3) aliphatischen Hydroxycarbonsäuren mit 4 bis 18 Kohlenstoffatomen,
D) eine gegenüber Carboxyl- und/oder Carbonsäureanhydridgruppen reaktive Gruppen aufweisende Komponente eines mittleren Molekulargewichtes von 200 bis 5000,
und gegebenenfalls
E) aus der Pulverlacktechnologie bekannte Hilfs- und Zusatzstoffe,
mit der Maßgabe, daß die Komponenten A), B), C) und D) in solchen Mengenverhältnissen vorliegen, daß auf jede Hydroxylgruppe der Komponente A) von 0,6 bis 1,4 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, auf jedes Carboxyl-Äquivalent der Komponente C) von 0,3 bis 1,5 gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht, und der Anteil der Komponenten C) und D) an der Gesamtmenge der Komponenten A), B), C) und D) von 10 bis 40 Gew.-% beträgt.

2. Pulverlack gemäß Anspruch 1, **dadurch gekennzeichnet, daß** die Komponente A) aus einem Hydroxylgruppen aufweisenden Polyester mit einer Erweichungstemperatur, die - bestimmt nach der Differential-Thermoanalyse (DTA) - innerhalb des Temperaturbereiches von 40 bis 120 °C liegt, einer OH-Zahl von 25 bis 200 und einem mittleren (aus der Funktionalität und dem Hydroxylgehalt berechenbaren) Molekulargewicht von 1000 bis 5000 besteht.

3. Pulverlack gemäß Anspruch 1, **dadurch gekennzeichnet, daß** die Komponente B) aus einer Uretdiongruppen und gegebenenfalls freie Isocyanatgruppen aufweisenden Polyadditionsverbindung auf Basis von Isophorondiisocyanat besteht.

4. Pulverlack gemäß Anspruch 1, **dadurch gekennzeichnet, daß** die Komponente B) aus einer Polyadditionsverbindung mit
a) einem Gehalt an freien Isocyanatgruppen (berechnet als NCO; Molekulargewicht = 42) von 0 bis 2 Gew.-%,
b) einem Gehalt an Uretdiongruppen (berechnet als C₂N₂O₂; Molekulargewicht = 84) von 3 bis 16 Gew.-%,
c) einem Gehalt an Urethangruppen (berechnet als CHNO₂; Molekulargewicht = 59) von 10 bis 22 Gew.-%,
d) einem Gehalt an Carbonsäureestergruppen (berechnet als CO_{2;} Molekulargewicht = 44) von 0 bis 20 Gew.-%
und/oder
e) einem Gehalt an Carbonatgruppen (berechnet als CO_{3;} Molekulargewicht = 60) von 0 bis 25 Gew.-%
besteht, mit der Maßgabe, daß der Gesamtgehalt an Carbonsäureester- und Carbonatgruppen der Polyadditionsverbndung mindestens 1 Gew.-% beträgt.

5. Pulverlack gemäß Anspruch 1, **dadurch gekennzeichnet, daß** die Komponente C) aus mindestens einem Polyisocyanat-modifizierten Dicarbonsäure(poly)anhydrid auf Basis einer gesättigten aliphatischen, 4 bis 12 Kohlenstoffatome aufweisenden Dicarbonsäure mit einem Gehalt an Carboxylgruppen (berechnet als CO₂H; Molekulargewicht = 45) von 0,5 bis 30 Gew.-%, einem Gehalt an Carbonsäureanhydridgruppen (berechnet als C₂O₃; Molekulargewicht = 72) von 5 bis 35 Gew.-% und einem Gehalt an in Amid- und/oder Harnstoffgruppen gebunden vorliegendem Stickstoff von 0,2 bis 8 Gew.-% besteht.

6. Pulverlack gemäß Anspruch 1, **dadurch gekennzeichnet, daß** die Komponente D) aus Trisglycidylisocyanurat und/oder dessen Oligomeren oder einem β-Hydroxyalkylamid auf Basis gesättigter Dicarbonsäuren mit 4 bis 12 Kohlenstoffatomen besteht.

7. Pulverlack gemäß Anspruch 1, **dadurch gekennzeichnet, daß** die Komponente D) aus einem β-Hydroxyalkylamid, hergestellt durch Umsetzung von Diethanolamin mit einem Gemisch aus 9 Gew.-Teilen Adipinsäuredimethylester und 1 Gew.-Teil Glutarsäuredimethylester, besteht.

8. Pulverlack gemäß Anspruch 1, **dadurch gekennzeichnet, daß** die Komponenten A), B), C) und D) in solchen Mengenverhältnissen vorliegen, daß auf jede Hydroxylgruppe der Komponente A) von 0,8 bis 1,2 Isocyanatgruppen der Komponente B) entfallen, wobei unter Isocyanatgruppen der Komponente B) die Summe aus in dimerer Form als Uretdiongruppen vorliegenden Isocyanatgruppen und freien Isocyanatgruppen verstanden wird, auf jedes Carboxyl-Äquivalent der Komponente C) von 0,4 bis 1,2 gegenüber Carboxyl- und/oder Carbonsäureanhydridgruppen reaktive Gruppen der Komponente D) entfallen und der Anteil der Komponenten C) und D) an der Gesamtmenge der Komponenten A), B), C) und D) von 15 bis 35 Gew.-% beträgt.

9. Verwendung des Pulverlacks gemäß Anspruch 1 zur Herstellung matter Beschichtungen.

10. Verwendung des Pulverlacks gemäß Anspruch 1 zur Beschichtung hitzeresistenter Substrate.

## Claims

1. Powder coating containing
A) a binder component having hydroxyl groups, which is solid below 40°C and liquid above 130°C, with an OH-number of 25 to 200 and an average molecular weight (calculable from the functionality and the hydroxyl content) of 400 to 10,000,
B) a polyaddition compound based on aliphatic and/or cycloaliphatic diisocyanates having uretdione groups and optionally free isocyanate groups, which is solid below 40°C and liquid above 125°C,
C) a component having carboxyl and/or carboxylic acid anhydride groups, which is solid below 40°C and liquid above 160°C, consisting of at least one component selected from
C1) (cyclo)aliphatic dicarboxylic acids containing 4 to 20 carbon atoms,
C2) monomeric and/or polymeric, optionally modified, anhydrides of such dicarboxylic acids and
C3) aliphatic hydroxycarboxylic acids containing 4 to 18 carbon atoms,
D) a component having groups which are reactive to carboxyl and/or carboxylic acid anhydride groups with an average molecular weight of 200 to 5,000,
and optionally
E) auxiliary substances and additives known from powder coating technology, with the proviso that components A), B), C) and D) are present in such quantity ratios, that 0.6 to 1.4 isocyanate groups of component B) are assigned to each hydroxyl group of component A), isocyanate groups of component B) being understood to mean the sum of isocyanate groups present in dimeric form as uretdione groups and free isocyanate groups, 0.3 to 1.5 groups reactive to carboxyl and/or carboxylic acid anhydride groups of component D) being assigned to each carboxyl equivalent of component C), a carboxyl group corresponding to one carboxyl equivalent and a carboxylic acid anhydride group corresponding to two carboxyl equivalents, and the proportion of components C) and D) amounting to 10 to 40 wt.% of the total quantity of components A), B), C) and D).

2. Powder coating according to claim 1, **characterised in that** component A) consists of a polyester having hydroxyl groups, with a softening point, determined by differential thermoanalysis (DTA), which falls within the temperature range 40 to 120°C, an OH-number of 25 to 200 and an average molecular weight (calculable from the functionality and the hydroxyl content) of 1,000 to 5,000.

3. Powder coating according to claim 1, **characterised in that** component B) consists of a polyaddition compound based on isophorone diisocyanate, having uretdione groups and optionally free isocyanate groups.

4. Powder coating according to claim 1, **characterised in that** component B) consists of a polyaddition compound containing
a) 0 to 2 wt.% free isocyanate groups (calculated as NCO; molecular weight = 42) ,
b) 3 to 16 wt.% uretdione groups (calculated as C₂N₂O₂; molecular weight = 84),
c) 10 to 22 wt.% urethane groups (calculated as CHNO₂; molecular weight = 59)
d) 0 to 20 wt.% carboxylic acid ester groups (calculated as CO₂; molecular weight = 44)
and/or
e) 0 to 25 wt.% carbonate groups (calculated as CO₃; molecular weight = 60)
with the proviso that the polyaddition compound contains a total of at least 1 wt.% carboxylic acid ester and carbonate groups.

5. Powder coating according to claim 1, **characterised in that** component C) consists of at least one polyisocyanate-modified dicarboxylic acid (poly)anhydride based on a saturated aliphatic dicarboxylic acid having 4 to 12 carbon atoms with a content of carboxyl groups (calculated as CO₂H; molecular weight = 45) of 0.5 to 30 wt.%, a content of carboxylic acid anhydride groups (calculated as C₂O₃; molecular weight = 72) of 5 to 35 wt.% and a content of nitrogen bound in amide and/or urea groups of 0.2 to 8 wt.%.

6. Powder coating according to claim 1, **characterised in that** component D) consists of trisglycidlyl iscocyanurate and/or oligomers thereof or a β-hydroxylalkyl amide based on saturated dicarboxylic acids containing 4 to 12 carbon atoms.

7. Powder coating according to claim 1, **characterised in that** component D) consists of a β-hydroxyalkyl amide, produced by reacting diethanol amine with a mixture of 9 parts by weight adipic acid dimethylester and 1 part by weight glutaric acid dimethylester.

8. Powder coating according to claim 1, **characterised in that** components A), B), C) and D) are present in such quantity ratios that 0.8 to 1.2 isocyanate groups of component B are assigned to each hydroxyl group of component A), isocyanate groups of component B) being understood to mean the sum of isocyanate groups present in dimeric form as uretdione groups and free isocyanate groups, 0.4 to 1.2 groups reactive to carboxyl and/or carboxylic acid anhydride groups of component D) are assigned to each carboxyl equivalent of component C) and the proportion of components C) and D) in the total quantity of components A), B), C) and D) is 15 to 35 wt.%.

9. Use of the powder coating according to claim 1 for the production of matt coatings.

10. Use of the powder coating according to claim 1 for the coating of heat-resistant substrates.

## Revendications

1. Laque pulvérulente contenant :
A) un composant liant présentant des radicaux hydroxyle, présent sous forme liquide au-dessus de 130°C et solide en dessous de 40°C, avec un indice OH allant de 25 à 200 et un poids moléculaire moyen (calculé sur la fonctionnalité et la teneur en hydroxyle) allant de 400 à 10 000 ;
B) un composé de polyaddition présentant des radicaux uretdione et éventuellement, des radicaux isocyanate libres, présent sous forme liquide au-dessus de 125°C et solide en dessous de 40°C, à base de diisocyanates aliphatiques et/ou cycloaliphatiques ;
C) un composant présentant des radicaux carboxyliques et/ou anhydride d'acide carboxylique, présent sous forme liquide au-dessus de 160°C et solide en dessous de 40°C, consistant en au moins un composant choisi parmi :
C1) les diacides carboxyliques (cyclo)aliphatiques ayant 4 à 20 atomes de carbone ;
C2) les anhydrides monomères et/ou polymères , éventuellement modifiés, de ces diacides carboxyliques, et
C3) des acides hydroxycarboxyliques aliphatiques ayant 4 à 18 atomes de carbone ;
D) un composant présentant des radicaux réagissant avec les radicaux carboxyliques et/ou anhydride d'acide carboxylique, ayant un poids moléculaire moyen allant de 200 à 5000, et le cas échéant,
E) les additifs et auxiliaires connus dans la technologie des laques pulvérulentes ;
avec la condition que les composants A), B), C) et D) sont présents en des rapports quantitatifs tels que pour chaque radical hydroxyle du composant A), on ait 0,6 à 1,4 radical isocyanate du composant B), où par radical isocyanate du composant B), on entend la somme des radicaux isocyanate présents sous forme dimère en tant que radicaux uretdione et des radicaux isocyanate libres, à chaque équivalent carboxyle du composant C), on ait 0,3 à 1,5 radical réagissant avec les radicaux carboxyliques et/ou anhydride d'acide carboxylique du composant D), où un radical carboxyle correspond à un et un radical anhydride d'acide carboxylique correspond à deux équivalents carboxyle, et la proportion des composants C) et D) par rapport à la quantité totale des composants A), B), C) et D) se situe dans l'intervalle allant de 10 à 40% en poids.

2. Laque pulvérulente suivant la revendication 1, **caractérisée en ce que** le composant A) consiste en un polyester contenant des radicaux hydroxyle, avec une température de ramollissement, déterminée par thermoanalyse différentielle (DTA), qui se situe dans l'intervalle de température allant de 40 à 120°C, un indice OH allant de 25 à 200 et un poids moléculaire moyen (pouvant être calculé sur la fonctionnalité et la teneur en hydroxyle) allant de 1000 à 5000.

3. Laque pulvérulente suivant la revendication 1, **caractérisée en ce que** le composant B) consiste en un composé de polyaddition présentant des radicaux uretdione et éventuellement, des radicaux isocyanate libres, à base d'isophoronediisocyanate.

4. Laque pulvérulente suivant la revendication 1, **caractérisée en ce que** le composant B) consiste en un composé de polyaddition avec :
a) une teneur en radicaux isocyanate libres (calculée comme NCO, poids moléculaire = 42) allant de 0 à 2% en poids ;
b) une teneur en radicaux uretdione (calculée comme C₂N₂O₂, poids moléculaire = 84) allant de 3 à 16% en poids ;
c) une teneur en radicaux uréthanne (calculée comme CHNO₂, poids moléculaire = 59) allant de 10 à 22% en poids ;
d) une teneur en radicaux ester d'acide carboxylique (calculée comme CO₂, poids moléculaire = 44) allant de 0 à 20% en poids, et/ou
e) une teneur en radicaux carbonate (calculée comme CO₃, poids moléculaire = 60) allant de 0 à 25% en poids,
avec la condition que la teneur totale en radicaux ester d'acide carboxylique et carbonate du composé de polyaddition s'élève à au moins 1% en poids.

5. Laque pulvérulente suivant la revendication 1, **caractérisée en ce que** le composant C) consiste en au moins un (poly)anhydride de diacide carboxylique, modifié par un polyisocyanate, à base d'un diacide carboxylique saturé aliphatique, ayant 4 à 12 atomes de carbone, avec une teneur en radicaux carboxyle (calculée comme CO₂H ; poids moléculaire = 45) allant de 0,5 à 30% en poids, une teneur en radicaux anhydride d'acide carboxylique (calculée comme C₂O₃ ; poids moléculaire = 72) allant de 5 à 35% en poids et une teneur en azote présent sous la forme de radicaux amide et/ou urée allant de 0,2 à 8% en poids.

6. Laque pulvérulente suivant la revendication 1, **caractérisée en ce que** le composant D) consiste en l'isocyanurate de trisglycidyle et/ou ses oligomères ou un β-hydroxylalcoylamide à base de diacides carboxyliques saturés ayant 4 à 12 atomes de carbone.

7. Laque pulvérulente suivant la revendication 1, **caractérisée en ce que** le composant D) consiste en un β-hydroxylalcoylamide, préparé par réaction de la diéthanolamine avec un mélange de 9 parties en poids de l'ester diméthylique de l'acide adipique et de 1 partie en poids de l'ester diméthylique de l'acide glutarique.

8. Laque pulvérulente suivant la revendication 1, **caractérisée en ce que** les composants A), B), C) et D) sont présents en des rapports quantitatifs tels que pour chaque radical hydroxyle du composant A), on ait 0,8 à 1,2 radical isocyanate du composant B), où les radicaux isocyanate du composant B) sont entendus comme la somme des radicaux isocyanate présents comme radicaux uretdione sous forme dimère et des radicaux isocyanate libres, pour chaque équivalent carboxyle du composant C), on ait 0,4 à 1,2 radical réagissant avec les radicaux carboxyle et/ou anhydride d'acide carboxylique du composant D), et la proportion des composants C) et D) sur la quantité totale des composants A), B), C) et D) se situe dans l'intervalle allant de 15 à 35% en poids.

9. Utilisation de la laque pulvérulente suivant la revendication 1, pour préparer des revêtements mats.

10. Utilisation de la laque pulvérulente suivant la revendication 1, pour revêtir des substrats résistant à la chaleur.
